# FASCICULE DE BREVET EUROPEEN

(11) **EP 2 193 052 B1**
(45) Date de publication et mention de la délivrance du brevet: **29.06.2011**
(21) Numéro de dépôt: 08841731.6
(22) Date de dépôt: 01.10.2008
(51) Int. Cl.: B60R 21/215, B60R 21/205

(54) **DISPOSITIF DE SECURITE A SAC GONFLABLE POUR VEHICULE AUTOMOBILE**
AIRBAG-SICHERHEITSVORRICHTUNG FÜR EIN KRAFTFAHRZEUG
AIRBAG SAFETY DEVICE FOR A MOTOR VEHICLE

(30) Priorité: 02.10.2007 FR 0757992
(43) Date de publication de la demande: 09.06.2010
(73) Titulaire: Renault S.A.S., 92100 Boulogne-Billancourt (FR)
(72) Inventeur: CHHEANG, Nakry, F-78470 Saint Rémy Les Chevreuse (FR)
(86) Numéro de dépôt international: PCT/FR2008/051780
(87) Numéro de publication internationale: WO 2009/053582

(56) Documents cités:
- US-A- 5 322 324
- US-A- 5 375 876

## Description

L'invention concerne un dispositif de sécurité à sac gonflable pour un véhicule automobile, qui comporte un moyen de freinage d'un volet de déploiement du sac gonflable.

L'invention concerne plus précisément un dispositif de sécurité à sac gonflable pour un véhicule automobile selon le préambule de la revendication 1.

Un tel dispositif est décrit dans US 5 322 324.

Le sac gonflable de sécurité, ou coussin gonflable, dénommé couramment par sa dénomination anglaise « airbag », est principalement utilisé dans un véhicule automobile pour protéger les passagers lors d'une collision et ainsi leur éviter de percuter violemment certains équipements du véhicule, comme le volant, une vitre latérale ou un appuie-tête avant pour un passager arrière.

Le sac gonflable est une membrane ou une enveloppe flexible qui est logée dans un module de sécurité, dans un état initial plié.

En cas de collision du véhicule, de l'air ou un autre gaz est très rapidement injecté dans le sac gonflable, par exemple par une réaction chimique explosive, de sorte que le sac est déployé rapidement depuis son état initial plié jusqu'à un état final gonflé de sécurité dans lequel le sac gonflable est apte à protéger un passager contre un choc.

De nombreux types de dispositifs de sécurité à sac gonflable ont été proposés, notamment un dispositif de sécurité destiné à équiper une planche de bord d'un véhicule automobile, comme celui qui est décrit dans le document US-A-6,070,901 et qui permet de protéger un passager avant.

De façon générale, ce type de dispositif de sécurité de planche de bord comporte un module de sécurité, ou module airbag, logeant un sac gonflable qui est apte à être déployé d'arrière en avant depuis son état initial plié jusqu'à son état déployé et gonflé de sécurité dans l'habitacle du véhicule.

Le dispositif de sécurité comporte un volet de déploiement du sac gonflable qui s'étend sous la planche de bord, contre une portion mécaniquement pré-affaiblie d'une face inférieure de la planche de bord du véhicule.

Le dispositif comporte un cadre qui délimite un orifice de déploiement du sac gonflable vers l'extérieur et qui est relié sur le volet par une charnière.

Lorsque le sac gonflable se déploie, le volet est entraîné en pivotement sous l'action de poussée du sac gonflable et la portion pré-affaiblie de la planche de bord cède, de sorte que le sac gonflable est apte à être déployé dans l'habitacle du véhicule en passant à travers l'orifice de déploiement et à travers la planche de bord, dans son état déployé de sécurité.

Toutefois, la vitesse de déploiement du sac gonflable est telle que le volet, lors de son déploiement, atteint une vitesse de pivotement élevée, de sorte que le volet est susceptible, notamment vers la fin de sa course, de percuter violemment et de détériorer des éléments du véhicule comme le pare-brise ou un élément décoratif agencé sur la planche de bord.

L'invention remédie notamment à cet inconvénient en proposant un dispositif de sécurité comportant un moyen de freinage du volet, notamment au voisinage de la fin de sa course.

Dans ce but, l'invention propose un dispositif de sécurité à sac gonflable selon la revendication 1.

Selon d'autres caractéristiques de l'invention :
- en section par un plan axial orthogonal à un axe de pivotement du volet mobile, le volet présente une forme de L et il comporte :
   - une plaque radiale qui est apte à obturer l'orifice de déploiement du sac gonflable, et
   - une plaque axiale qui est globalement parallèle à l'axe de pivotement du volet et qui comporte ladite face mobile du volet, un tronçon avant relié à la plaque radiale du volet et un tronçon arrière qui est relié en pivotement sur le cadre au moyen d'une première charnière de pivotement du volet, et le cadre comporte une plaque axiale qui comporte ladite face fixe du cadre et qui est agencée globalement en vis à vis de la plaque axiale mobile du volet ;
- le moyen de freinage comporte une pluralité de nervures d'absorption d'énergie dont chacune s'étend depuis ladite face fixe du cadre jusqu'à ladite face mobile du volet ;
- le volet comporte une seconde charnière de pivotement qui est constituée par une portion de liaison de la plaque axiale du volet avec la plaque radiale du volet ;
- le cadre délimite un puits de guidage du déploiement du sac gonflable qui s'étend d'arrière en avant depuis le module de sécurité jusqu'à l'orifice avant de déploiement du sac gonflable ;
- le volet, le cadre, la première charnière, la seconde charnière, le puits et le moyen de freinage sont réalisés venus de matière par moulage en matière plastique en une seule pièce ;
- le volet comporte un insert métallique de renfort qui s'étend depuis la plaque radiale du volet jusqu'à la plaque axiale du volet ;
- le dispositif comporte des moyens pour sa fixation sur une face arrière d'une planche de bord d'un véhicule automobile.

D'autres caractéristiques et avantages apparaîtront au cours de la lecture de la description détaillée qui va suivre pour la compréhension de laquelle on se reportera aux dessins en annexe parmi lesquels :
- la figure 1 est une vue en section, illustrant un dispositif de sécurité qui est agencé sous une planche de bord d'un véhicule automobile et qui comporte un volet mobile de déploiement d'un sac gonflable ;
- la figure 1D est une vue de détail en section, illustrant un moyen de freinage du volet de la figure 1 qui est interposé entre une face mobile du volet et une face fixe d'un cadre ;
- la figure 2 est une vue en perspective de trois quarts de dessus, illustrant le volet dans une position de repos et le moyen de freinage du volet de la figure 1 ;
- la figure 3 est une vue en perspective de trois quarts de dessus, avec arrachement, illustrant un insert qui est noyé dans le volet ;
- la figure 4 est une vue similaire à celle de la figure 1, illustrant le sac gonflable de la figure 1 dans une position intermédiaire de déploiement et le volet dans une position intermédiaire d'ouverture ;
- la figure 5 est une vue similaire à celle de la figure 1, illustrant le sac gonflable dans sa position gonflée et déployée de sécurité et le volet dans sa position ouverte.

Dans la description qui va suivre, des chiffres de référence identiques désignent des pièces identiques ou ayant des fonctions similaires.

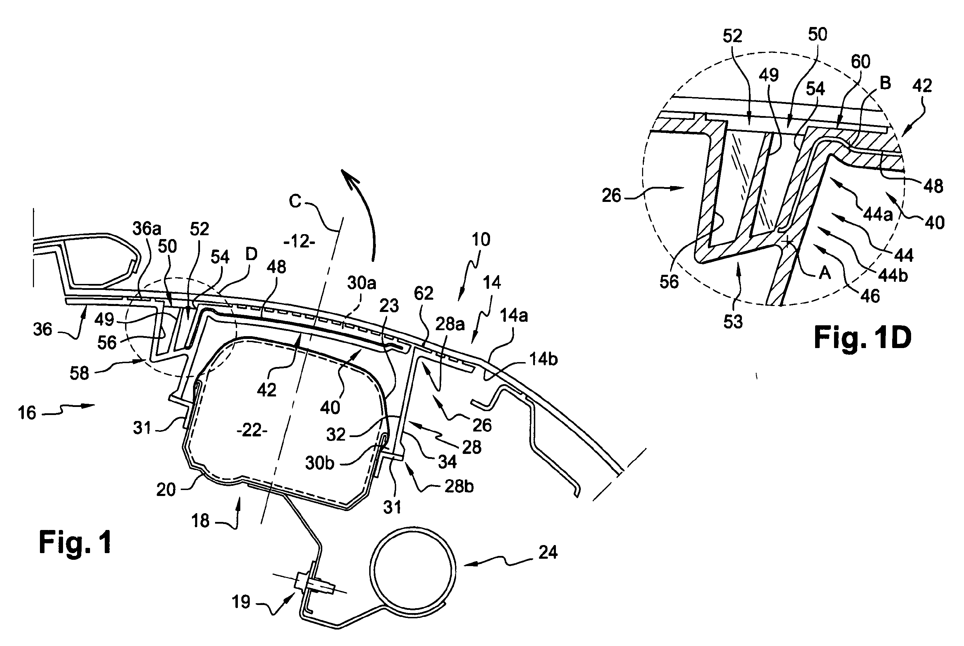

On adoptera arbitrairement la direction d'arrière en avant en référence à l'axe C de la figure 1.

La figure 1 représente une planche de bord 10 d'un habitacle 12 d'un véhicule automobile, dans la zone qui est agencée en vis à vis du siège avant passager (non représenté).

La planche de bord 10 comporte une peau 14 dont une face avant 14a, ou externe, est agencée en regard de l'habitacle et dont une face arrière 14b, ou interne, est agencée en regard d'un dispositif 16 de sécurité à sac gonflable.

Le dispositif 16 de sécurité comporte un module 18 de sécurité à sac gonflable, ou « module airbag ».

Le module 18 de sécurité est fixé sur un élément de la structure du véhicule automobile, ici au moyen d'une pluralité d'ensembles vis-écrous 19 (dont un seul est représenté) sur une traverse 24 métallique qui s'étend transversalement dans la planche de bord 10.

De façon classique, le module 18 de sécurité comporte un boîtier 20 dans lequel est agencé un sac gonflable 22 dans une position initiale pliée.

Dans sa position initiale, le sac gonflable 22 est protégé par un film 23 de protection.

Le module 18 de sécurité comporte des moyens de gonflage (non représentés) du sac gonflable 22, comme un moyen à gaz ou un moyen pyrotechnique, qui sont déclenchés à la suite d'un choc violent du véhicule automobile.

Le déclenchement des moyens de gonflage provoque le gonflage et le déploiement rapide du sac gonflable 22 selon un axe de déploiement C d'arrière en avant, depuis la position pliée initiale du sac gonflable 22 jusqu'à une position gonflée de sécurité dans l'habitacle 12.

Le dispositif 16 de sécurité comporte un cadre 26 de forme annulaire qui est agencé en avant du module 18 de sécurité.

Le cadre 26 délimite un puits 28 de guidage du déploiement du sac gonflable 22 qui est globalement rectangulaire en section par un plan radial.

Le puits 28 s'étend d'arrière en avant autour de l'axe de déploiement C du sac gonflable, de façon à délimiter un orifice arrière 30b et un orifice avant 30a opposé de déploiement du sac gonflable 22.

De plus, le puits 28 de déploiement comporte une paroi annulaire interne 32 qui délimite un couloir de guidage du déploiement du sac gonflable 22, et une paroi annulaire externe 34.

Comme le montre la figure 1, le boîtier 20 du module 18 de sécurité est maintenu sur un tronçon arrière 28b du puits 28, ici au moyen de deux équerres 31, de sorte que l'orifice arrière 30b du puits 28 s'étend autour du module 18 de sécurité.

Comme l'illustrent les figures 1 à 3, le cadre 26 comporte une plate-forme 36 annulaire qui s'étend radialement depuis la paroi annulaire externe 34 d'un tronçon avant 28a du puits 28, autour de l'orifice avant 30a de déploiement.

La plate-forme 36 comporte une face avant 36a qui constitue un moyen de fixation du dispositif de sécurité 16 sur la planche de bord 10 et qui est ici fixée sur la face arrière 14b de la planche de bord 10 par soudage.

Toutefois, la plate forme 36 du cadre 26 peut être fixée sur la face arrière 14b de la planche de bord 10 par tout autre moyen adapté, comme par collage, rivetage, vissage ou par emboîtement élastique.

Le dispositif 16 de sécurité comporte un volet 40 pivotant qui est en forme de « L » en section par un plan axial orthogonal à un axe principal A de pivotement du volet 40, et qui permet d'obturer l'orifice avant 30a de déploiement du sac gonflable 22.

A cet effet, le volet 40 comporte une plaque radiale 42 de forme globalement rectangulaire, qui s'étend radialement à l'avant du puits 28 de façon à obturer l'orifice 30a de déploiement.

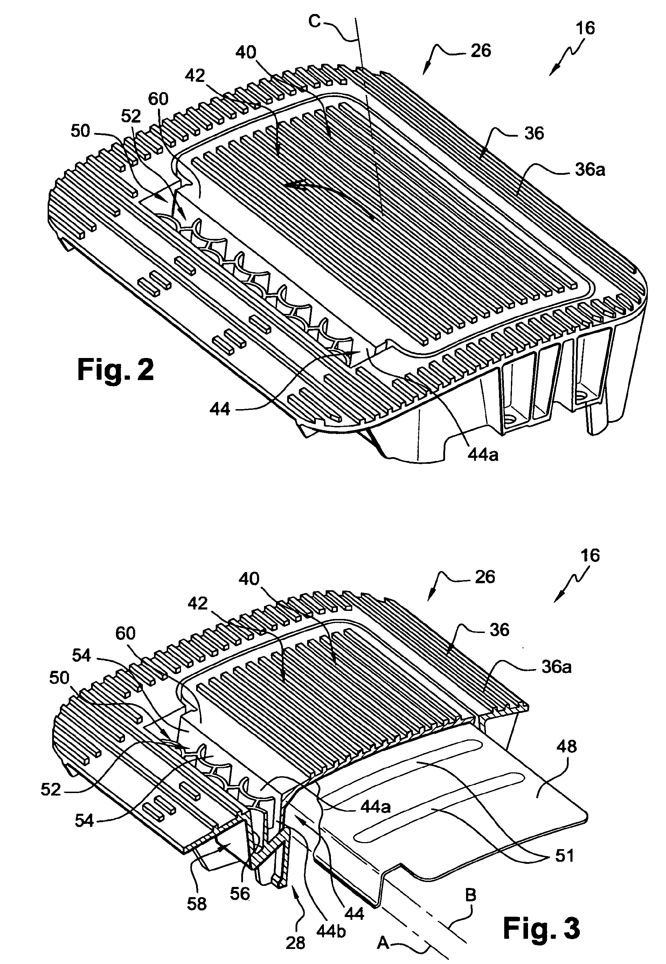

Comme le montre la figure 2, la plaque radiale 42 est ici agencée de façon affleurante à la face avant 36a de la plate-forme 36 et la plaque radiale 42 comporte trois premiers côtés périphériques qui délimitent une fente en forme de « U » avec la plate-forme 36.

Comme l'illustre la figure 1D, le volet 40 comporte une plaque axiale 44 dont un tronçon avant 44a est relié sur un quatrième côté périphérique de la plaque radiale 42 du volet 40, et dont un tronçon arrière 44b est relié sur le cadre 26, de façon à constituer une première charnière 46 de pivotement du volet 40 autour de l'axe principal A de pivotement.

Le volet 40 comporte un insert 48 métallique qui s'étend depuis la plaque radiale 42 jusqu'à la plaque axiale 44 du volet 40.

Comme le montre la figure 3, l'insert 48 comporte ici une série de nervures 51 dont chacune s'étend orthogonalement à l'axe principal A de pivotement du volet 40, afin de rigidifier le volet 40.

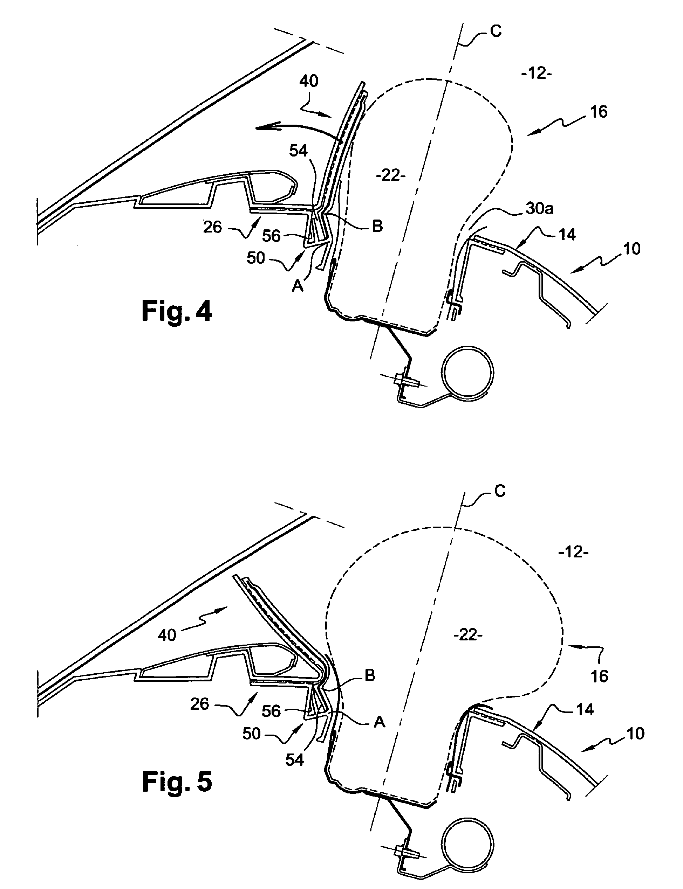

Le volet 40 est monté mobile sur le cadre 26 autour de l'axe principal A de pivotement de la première charnière 46, entre une position de repos, représentée à la figure 1, dans laquelle le volet 40 obture l'orifice avant 30a de déploiement et une position ouverte, représentée à la figure 5, dans laquelle le volet 40 est rabattu, ou pivoté, de sorte que le sac gonflable 22 est apte à être déployé à travers l'orifice avant 30a de déploiement.

Afin de favoriser le pivotement du volet 40 vers sa position ouverte, le volet 40 comporte une seconde charnière 60 de pivotement autour d'un axe secondaire B, qui est constituée par une portion de raccord de la plaque axiale 44 du volet 40 avec la plaque radiale 42 du volet 40.

Selon un autre aspect, le dispositif 16 de sécurité comporte un moyen de freinage 50 en pivotement du volet 40.

Le moyen de freinage 50 est agencé dans un logement 52 qui est globalement de la forme d'un parallélépipède de section en « U » ouvert vers l'avant.

Comme on peut le voir aux figures 1D et 3, le logement 52 est délimité par une plaque axiale 58 du cadre 26 et par la plaque axiale 44 du volet 40 qui sont agencées en vis à vis.

Or, la plaque axiale 58 du cadre 26 est fixe et la plaque axiale 44 du volet 40 pivote lors de l'ouverture du volet 40, de sorte que le logement 52 est délimité par une face mobile 54 de la plaque axiale 44 du volet 40 et une face fixe 56 de la plaque axiale 58 du cadre 26.

De plus, le logement 52 en « U » est délimité par une plaque radiale de fond 53 du cadre 26.

Le moyen de freinage 50 comporte ici une pluralité de nervures 49 qui s'étendent dans le logement 52 depuis la face mobile 54 de la plaque axiale 44 du volet 40 jusqu'à la face fixe 56 de la plaque axiale 58 du cadre 26.

Sans sortir du cadre de l'invention, le puits 28, le volet 40, le cadre 26, la première charnière 46, la seconde charnière 60 et le moyen de freinage 50 sont réalisés par moulage venus de matière plastique en une seule pièce.

Ainsi, lorsque les moyens de gonflage du sac gonflable 22 sont déclenchés, le sac gonflable 22 est déployé vers l'avant selon son axe de déploiement C depuis sa position initiale pliée dans le module 18.

Le sac gonflable 22 exerce un effort de poussée sur le volet 40, produisant le pliage de la première charnière 46 et de la seconde charnière 60 de sorte que le volet 40 est entraîné en pivotement autour de son axe principal A et de son axe secondaire B de pivotement, depuis sa position de repos vers sa position ouverte.

Le pivotement du volet 40 provoque l'arrachement de la peau 14 de la planche de bord 10.

A cet effet, la face arrière 14b de la peau 14 est pré-affaiblie mécaniquement par une encoche 62 qui s'étend en « U » de façon coïncidente à la fente en « U » délimitée par la plaque radiale 42 du volet 40.

Comme on peut le voir aux figures 4 et 5, au cours du pivotement du volet 40 vers sa position ouverte, la plaque axiale 44 du volet 40 pivote vers la plaque axiale 58 du cadre 26 autour de l'axe principal A de pivotement, de sorte que le moyen de freinage 50 est interposé et compressé entre la face fixe 56 du cadre 26 et la face mobile 54 du volet 40 mobile.

Le moyen de freinage 50 est compressé de sorte qu'il se déforme élastiquement ou plastiquement, grâce à quoi le moyen de freinage 50 absorbe au moins une partie de l'énergie du déplacement du volet 40 pour le freiner.

Ainsi, au voisinage de la fin de la course du volet 40, la vitesse de pivotement du volet 40 est telle que le volet 40 endommage peu ou pas les éléments avec lesquels il est susceptible d'entrer en contact.

Comme on peut le voir à la figure 5, lorsque le volet 40 est entraîné en pivotement, le logement 52 se referme sur lui-même, de sorte que la plaque axiale 44 mobile du volet 40 est en appui contre la plaque axiale 58 fixe du cadre 26 lorsque le volet 40 est au voisinage de la fin de sa course.

A titre non limitatif, le moyen de freinage 50 peut être tout élément ou ensemble d'éléments qui est interposé entre la face fixe 56 du cadre 26 et la face mobile 54 du volet 40 mobile et qui est apte à absorber au moins une partie de l'énergie du pivotement du volet 40 afin de le freiner.

Par exemple, le moyen de freinage 50 peut être un bloc alvéolé, ou une série de picots axiaux dont chacun s'étend vers l'avant depuis la plaque radiale de fond 53 du logement 52, ou un élément qui est réalisé en matériau déformable élastiquement du type mousse ou élastomère.

## Revendications

1. Dispositif (16) de sécurité à sac gonflable pour un véhicule automobile, dispositif (16) qui comporte :
- un module (18) de sécurité équipé d'un sac gonflable (22) qui est apte à être déployé, axialement d'arrière en avant vers l'extérieur du dispositif (16) selon un axe de déploiement, depuis un état initial plié dans le module (18) jusqu'à un état gonflé et déployé de sécurité ;
- un cadre (26) qui est agencé axialement en avant du module (18) de sécurité et qui délimite un orifice (30a) à travers lequel le sac gonflable (22) est apte à être déployé ;
- au moins un volet (40) qui est orthogonal à l'axe de déploiement et qui est monté pivotant sur le cadre (26) entre une position fermée de repos dans laquelle l'orifice (30a) de déploiement du sac gonflable (22) est obturé et une position ouverte, le volet (40) étant entraîné en pivotement vers sa position ouverte sous l'effort de poussée du sac gonflable (22) lors de son déploiement,
- un logement (52) qui est délimité par au moins une face fixe (56) du cadre (26) et une face mobile (54) du volet (40), le logement (52) comportant un moyen de freinage (50) du volet (40) qui, au cours de tout ou partie du déplacement du volet (40) vers sa position ouverte, est apte à être interposé entre la face fixe (56) du cadre (26) et la face mobile (54) du volet (40), de sorte que le moyen de freinage (50) absorbe au moins une partie de l'énergie du déplacement du volet (40) pour le freiner, notamment au voisinage de la fin de la course d'ouverture du volet (40),
**caractérisé en ce que** le moyen de freinage (50) comporte une pluralité de nervures (49) d'absorption d'énergie dont chacune s'étend depuis ladite face fixe (56) du cadre (26) jusqu'à ladite face mobile (54) du volet (40).

2. Dispositif (16) selon la revendication 1, **caractérisé en ce que**, en section par un plan axial orthogonal à un axe de pivotement du volet (40) mobile, le volet (40) présente une forme de L et il comporte :
- une plaque radiale (42) qui est apte à obturer l'orifice (30a) de déploiement du sac gonflable (22), et
- une plaque axiale (44) qui est globalement parallèle à l'axe de pivotement du volet (40) et qui comporte :
- - ladite face mobile (54) du volet (40),
- - un tronçon avant (44a) relié à la plaque radiale (42) du volet (40),
- - et un tronçon arrière (44b) qui est relié en pivotement sur le cadre (26) au moyen d'une première charnière (46) de pivotement du volet (40),
et **en ce que** le cadre (26) comporte une plaque axiale (58) qui comporte ladite face fixe (56) du cadre (26) et qui est agencée globalement en vis à vis de la plaque axiale (44) mobile du volet (40).

3. Dispositif (16) selon l'une quelconque des revendications précédentes, **caractérisé en ce que** le volet (40) comporte une seconde charnière (60) de pivotement qui est constituée par une portion de liaison de la plaque axiale (44) du volet (40) avec la plaque radiale (42) du volet (40).

4. Dispositif (16) selon l'une quelconque des revendications précédentes, **caractérisé en ce que** le cadre (26) délimite un puits (28) de guidage du déploiement du sac gonflable (22) qui s'étend d'arrière en avant depuis le module (18) de sécurité jusqu'à l'orifice avant (30a) de déploiement du sac gonflable (22).

5. Dispositif (16) selon les revendications précédentes, **caractérisé en ce que** le volet (40), le cadre (26), la première charnière (46), la seconde charnière (60), le puits (28) et le moyen de freinage (50) sont réalisés venus de matière par moulage en matière plastique en une seule pièce.

6. Dispositif (16) selon la revendication 2, **caractérisé en ce que** le volet (40) comporte un insert (48) métallique de renfort qui s'étend depuis la plaque radiale (42) du volet (40) jusqu'à la plaque axiale (44) du volet (40).

7. Dispositif (16) selon l'une quelconque des revendications précédentes, **caractérisé en ce qu'**il comporte des moyens pour sa fixation sur une face arrière (14b) d'une planche de bord (10) d'un véhicule automobile.

## Claims

1. Safety device (16) with inflatable bag for a motor vehicle, which device (16) comprises:
- a safety module (18) equipped with an inflatable bag (22) which can be deployed, axially from the rear forwards out of the device (16) along a deployment axis, from an initial state folded in the module (18) to an inflated and deployed safety state;
- a frame (26) which is arranged axially in front of the safety module (18) and which delimits an orifice (30a) through which the inflatable bag (22) can be deployed;
- at least one flap which is orthogonal to the deployment axis and which is mounted on the frame (26) so as to pivot between a closed resting position, in which the orifice (30a) for deployment of the inflatable bag (22) is covered, and an open position, the flap (40) being driven to pivot into its open position under the thrust force of the inflatable bag (22) during its deployment,
- a recess (52) which is delimited by at least one fixed face (56) of the frame (26) and a mobile face (54) of the flap (40), the recess (52) comprising a means (50) for braking the flap (40), which, during all or some of the movement of the flap (40) into its open position, is capable of being interposed between the fixed face (56) of the frame (26) and the mobile face (54) of the flap (40) so that the braking means (50) absorbs at least a part of the kinetic energy of the flap (40) in order to brake it, particularly in the vicinity of the end of the opening movement of the flap (40),
**characterized in that** the braking means (50) comprises a plurality of energy absorption ribs (49), each of which extends from the said fixed face (56) of the frame (26) to the said mobile face (54) of the flap (40).

2. Device (16) according to Claim 1, **characterized in that** in section the flap has an L shape in section in an axial plane orthogonal to a pivoting axis of the mobile flap (40), and it comprises:
- a radial plate (42) which is capable of covering the orifice (30a) for deployment of the inflatable bag (22), and
- an axial plate (44) which is overall parallel to the pivoting axis of the flap (40) and which comprises:
- - the said mobile face (54) of the flap (40),
- - a front segment (44a) connected to the radial plate (42) of the flap (40),
- - and a rear segment (44b) which is pivotally connected to the frame (26) by means of a first hinge (46) for pivoting of the flap (40),
and **in that** the frame (26) has an axial plate (58) which comprises the said fixed face (56) of the frame (26) and which is arranged overall facing the mobile axial plate (44) of the flap (40).

3. Device (16) according to either of the preceding claims, **characterized in that** the flap (40) comprises a second pivoting hinge (60) which consists of a portion connecting the axial plate (44) of the flap (40) to the radial plate (42) of the flap (40).

4. Device (16) according to any one of the preceding claims, **characterized in that** the frame (26) delimits a compartment (28) for guiding the movement of the inflatable bag (22), which extends from the rear forwards from the safety module (18) as far as the front orifice (30a) for deployment of the inflatable bag (22).

5. Device (16) according to the preceding claims, **characterized in that** the flap (40), the frame (26), the first hinge (46), the second hinge (60), the compartment (28) and the braking means (50) are made integrally by moulding plastic material in a single piece.

6. Device (16) according to Claim 2, **characterized in that** the flap (40) comprises a reinforcing metal insert (48) which extends from the radial plate (42) of the flap (40) as far as the axial plate (44) of the flap (40).

7. Device (16) according to any one of the preceding claims, **characterized in that** it comprises means for fixing it on a rear face (14b) of a dashboard (10) of a motor vehicle.

## Patentansprüche

1. Airbag-Sicherheitsvorrichtung (16) für ein Kraftfahrzeug, wobei die Vorrichtung (16) aufweist:
- ein Sicherheitsmodul (18), das mit einem Airbag (22) ausgestattet ist, der gemäß einer Entfaltungsachse von einem im Modul (18) zusammengefalteten Ursprungszustand bis zu einem aufgeblasenen und entfalteten Sicherheitszustand axial von hinten nach vorne zur Außenseite der Vorrichtung (16) entfaltet werden kann;
- einen Rahmen (26), der axial vor dem Sicherheitsmodul (18) angeordnet ist und eine Öffnung (30a) begrenzt, durch die hindurch der Airbag (22) entfaltet werden kann;
- mindestens eine Klappe (40), die orthogonal zur Entfaltungsachse ist, und die auf dem Rahmen (26) zwischen einer geschlossenen Ruhestellung, in der die Entfaltungsöffnung (30a) des Airbags (22) verschlossen ist, und einer offenen Stellung schwenkbar montiert ist, wobei die Klappe (40) unter der Schubkraft des Airbags (22) bei seiner Entfaltung in ihre offene Stellung geschwenkt wird,
- eine Aufnahme (52), die von mindestens einer ortsfesten Seite (56) des Rahmens (26) und einer beweglichen Seite (54) der Klappe (40) begrenzt wird, wobei die Aufnahme (52) eine Bremseinrichtung (50) der Klappe (40) aufweist, die während der ganzen oder eines Teils der Verschiebung der Klappe (40) in ihre offene Stellung zwischen die ortsfeste Seite (56) des Rahmens (26) und die bewegliche Seite (54) der Klappe (40) eingefügt werden kann, so dass die Bremseinrichtung (50) mindestens einen Teil der Energie der Verschiebung der Klappe (40) absorbiert, um sie insbesondere in der Nähe des Öffnungshubendes der Klappe (40) zu bremsen,
**dadurch gekennzeichnet, dass** die Bremseinrichtung (50) mehrere Rippen (49) zur Energieabsorption aufweist, von denen jede sich von der ortsfesten Seite (56) des Rahmens (26) bis zur beweglichen Seite (54) der Klappe (40) erstreckt.

2. Vorrichtung (16) nach Anspruch 1, **dadurch gekennzeichnet, dass**, im Querschnitt durch eine axiale Ebene orthogonal zu einer Schwenkachse der beweglichen Klappe (40), die Klappe (40) eine L-Form hat und aufweist:
- eine radiale Platte (42), die die Entfaltungsöffnung (30a) des Airbags (22) verschließen kann, und
- eine axiale Platte (44), die insgesamt parallel zur Schwenkachse der Klappe (40) ist und die aufweist:
- -die bewegliche Seite (54) der Klappe (40),
- -einen vorderen Abschnitt (44a), der mit der radialen Platte (42) der Klappe (40) verbunden ist,
- -und einen hinteren Abschnitt (44b), der mittels eines ersten Schwenkscharniers (46) der Klappe (40) schwenkbar mit dem Rahmen (26) verbunden ist,
und dass der Rahmen (26) eine axiale Platte (58) aufweist, die die ortsfeste Seite (56) des Rahmens (26) aufweist, und die insgesamt gegenüber der beweglichen axialen Platte (44) der Klappe (40) angeordnet ist.

3. Vorrichtung (16) nach einem der vorhergehenden Ansprüche, **dadurch gekennzeichnet, dass** die Klappe (40) ein zweites Schwenkscharnier (60) aufweist, das aus einem Verbindungsabschnitt der axialen Platte (44) der Klappe (40) mit der radialen Platte (42) der Klappe (40) besteht.

4. Vorrichtung (16) nach einem der vorhergehenden Ansprüche, **dadurch gekennzeichnet, dass** der Rahmen (26) einen Führungsschacht (28) des Entfaltens des Airbags (22) begrenzt, der sich von hinten nach vorne vom Sicherheitsmodul (18) bis zur vorderen Entfaltungsöffnung (30a) des Airbags (22) erstreckt.

5. Vorrichtung (16) nach den vorhergehenden Ansprüchen, **dadurch gekennzeichnet, dass** die Klappe (40), der Rahmen (26), das erste Scharnier (46), das zweite Scharnier (60), der Schacht (28) und die Bremseinrichtung (50) aus demselben Material durch Formen von Kunststoff einstückig hergestellt werden.

6. Vorrichtung (16) nach Anspruch 2, **dadurch gekennzeichnet, dass** die Klappe (40) einen metallischen Verstärkungseinsatz (48) aufweist, der sich von der radialen Platte (42) der Klappe (40) bis zur axialen Platte (44) der Klappe (40) erstreckt.

7. Vorrichtung (16) nach einem der vorhergehenden Ansprüche, **dadurch gekennzeichnet, dass** sie Einrichtungen für ihre Befestigung an einer Rückseite (14b) eines Armaturenbretts (10) eines Kraftfahrzeugs aufweist.
